# EUROPEAN PATENT APPLICATION

(11) **EP 1 233 350 A1**
(43) Date of publication of application: **21.08.2002**
(21) Application number: 01810158.4
(22) Date of filing: 16.02.2001
(51) Int. Cl.: G06F 17/30

(54) **Customizable web portal**

(71) Applicant: ABB RESEARCH LTD., 8050 Zürich (CH)
(72) Inventor: Werner, Thomas, 5404 Baden (CH); Fabri, Andreas, 06130 Le Plan de Grasse (FR)
(74) Representative: ABB Patent Attorneys

(57) **Abstract**

A user accesses a computer network (4) from a user computer (3) through a personal portal located on a portal server (1). A set of information requests is used to build a composite web page (6) made of bits of information (61, 62, 63) gathered from various servers (51, 52, 53). The set of information requests is defined according to a user preference list (21), which is loaded from an external computer-based storage device (2) to the portal server.

The externally stored user preference list can be loaded and adapted by any portal connected to the computer network. Therefore, the user-defined sets of information requests will not have to be recustomized for different portals.

## Description

### Field of the Invention

The present invention relates to computer networks such as the Internet or World Wide Web (web), and, in particular, to portals used to retrieve customized sets of information during web browsing and other network access activities.

### Background of the Invention

Computer networks such as the Internet or World Wide Web, enable users to access an almost unlimited amount of information.

Although web browsers and other applications for Internet searching exist to enable users to locate any and all available information, many users are interested in receiving the same types of information during each of their web browsing sessions.

Assume that a particular user may be interested in the current prices of specific stocks that he owns, the latest scores for his favorite sports teams, his daily horoscope, and the weather report for his home town. For such users, personal portals are being provided by a number of Internet service providers and web servers.

Personal portal services are e.g. the "My Netscape" portal provided by Netscape Communications Corp., the "My Yahoo!" portal provided by Yahoo! Inc. or the "myCNN" portal provided by Cable News Network.

A personal portal is a network search tool that defines a set of user-selected information requests. Whenever the user accesses the network through his personal portal, the portal gathers information satisfying the specified requests from one or more network-based databases and presents that information to the user as a computer display with a composite format, thereby providing the user with what is essentially his own personal, customized web page. The user-specific information that is gathered when the user subscribes to the portal and customizes his web page is stored in secure databases by the portal provider. Since that customization information is stored and kept secret by the portal provider the customization according to the specific requests has to be redone all over again, every time the user accesses the network through a new portal. If a user would like to change the defined set of information requests in more than one portal (e.g., adding and deleting stocks to reflect changes in the composition of his personal stock portfolio), the same manual changes will have to be done for every portal.

### Summary of the Invention

The present invention addresses the problem of having to recustomize a user-definable set of information requests used to gather information which is presented to a user accessing a network through a portal every time a user accesses the network through a new portal.

This problem is solved by the invention as claimed in the independent claim 1. The invention is directed to portals that are modified according to user preferences that are stored independently from the portals.

In one embodiment, the present invention is a method for presenting information to a user accessing a computer-based server, comprising the steps of (a) providing a portal to the user, wherein the portal defines a set of information requests used to gather the information presented to the user; (b) loading a user preference list from an external computer-based storage device to the server; and (c) defining the requested set of information according to the user preference list.

In another embodiment, the present invention is a computer-based server configured to provide access to a user via a portal through which information is presented to the user in composite format as claimed in claim 5.

In another embodiment, the present invention is a computer-based storage device configured to store user preference lists as claimed in claim 6.

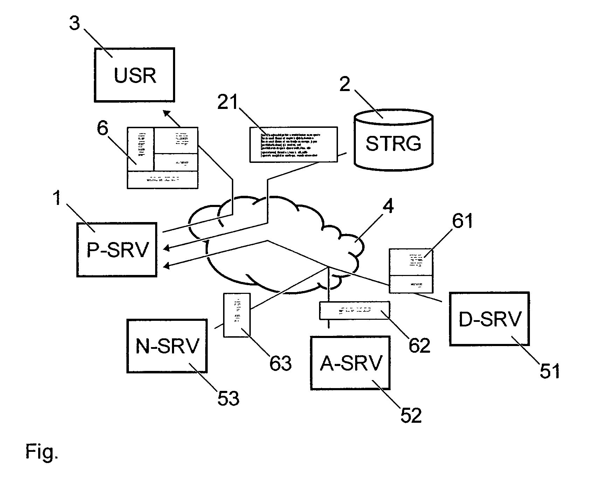

### Brief description of the Drawing

Details and advantages of the present invention will become more fully apparent from the following description, the claims and the accompanying drawing in which shows a communication network used to carry out the method of the invention.

### Description of preferred embodiments

The drawing shows a communication network configuration used to support the use of a personalized portal by a particular user according to the present invention. Said network 4 comprises at least one computer-based portal server 1, a computer-based storage device 2 and a user computer device 3 including a monitor for displaying information.

The user connects to the portal located on the computer-based portal server 1 via a network connection. If the user is unknown to the portal, for example, because the user has never accessed that particular portal before, and the portal therefore has no data about that user, the user will be presented a predefined standard set of information requests shown to all first time users.

In order to customize the portal site by defining his own set of information requests the user needs to provide the portal with his user preferences. According to the invention, these user preferences are stored on a computer-based storage device 2 in the form of a user preference list 21.

A user preference list contains information that is kept as general as possible but still fits the users needs. It is preferably made of XML-type entries. A simple user preference list would e.g. contain entries like

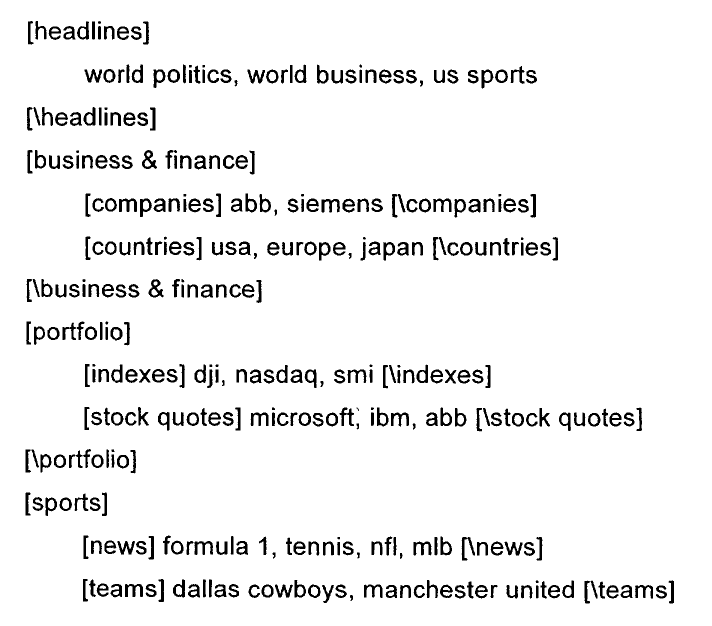

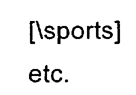

The portal server 1 retrieves the user preference list 21 from the storage device 2. The address of the storage-device is either entered manually in a dialog box by the user, or retrieved by the portal server from the user computer 3 where the address is stored in the internal memory or harddisk, respectively. Since the particular portal retrieves the user preference list for the first time, the user will have to authenticate him to the storage-device that stores the user preference list.

Once the user preference list has been loaded to the portal server the portal server will start to generate a composite website 6 of information for presentation on the user's monitor based on the user preference list 21. The portal server gathers bits of information 61, 62, 63 using any of a number of different servers, like a database server 51, an application server 52, a news server 53, etc.

A site based on the exemplary user preference list shown above would contain headline information that best fit the fields of world politics, world business and US sports, general company business information about ABB and Siemens and general business information from USA, Europe and Japan, etc.

Assuming, for example, that one portal's sports information provider does not support the category US sports, the portal will have to find corresponding categories, e.g. American Football, Baseball, etc., that are supported by that provider and best match that unsupported category.

The computer-based storage device 2 on which the user preference list is stored can be accessed from any portal server 1 that is connected to the network 4 and the user granted access. Although the storage device could be part of one portal, it remains external to all but at most one portal.

Instead of being stored on an extra storage device 2 the user preference list 21 can alternatively be stored on the user computer 3. This will enable the user to always control his user preference list and who is accessing it.

Since every portal might have several different database providers from which information is gathered to satisfy the portal requests the actual information which is shown to the user will vary from one portal to another. Also the design of the portal, e.g. numbers of columns of the site, colors of headlines and text, size of pictures included on the site, will not be the same on each portal. Therefore, the user will have to manually adjust the portal after the user preference list has been loaded and the information requests have been defined.

Changes to the user preference list are either done by directly editing the user preference list or by adopting changes that are done to one portal.

To edit the user preference list an interface is shown to the user. The user can select from different predefined categories or even add his own. Changes are stored in the user preference list. The interface guarantees that only valid entries are being stored in the user preference list.

The user can do changes in the definitions of the portal requests after connecting to the network through the portal by using his personal web page. The user edits the web site (e.g. adds/ deletes entries) and the portal server records and stores the changes either locally or on the external storage device in the user preference list.

The equipment used by the user to navigate the network through a portal can be any suitable type of equipment used for such a purpose including a computer terminal, a personal computer (PC), a portable laptop computer, a television set-top box or a personal data assistant (PDA). Similarly, the communication links by which users access the network include permanent or temporary hard-wired links and wireless connections.

Although the present invention has been described in the context of accessing computer networks, such as the Internet (World Wide Web) or Intranets, it will be understood that the present invention can also be implemented in the context of accessing a server that is not part of a larger network.

The present invention can be embodied in the form of methods, apparatuses for practicing those methods, or program code, wherein, when the program code is loaded into and executed by a machine, such as a computer, the machine becomes an apparatus for practicing the invention. In the form of program code the present invention can be embodied in tangible media, such as floppy diskettes, CD-ROMs, hard drives or any other machine-readable storage medium, loaded into and/or executed by a machine, or transmitted over some transmission medium, such as over electrical wiring or cabling, through fiber optics, or via electromagnetic radiation.

When implemented on a general-purpose processor, the program code segments combine with the processor to provide a unique device that operates analogously to specific logic circuits.

### List of reference numbers

- 1: Portal server
- 2: Storage device
- 21: Preference list
- 3: User computer
- 4: Network, Internet
- 51, 52, 53: Network information server (database, application, news)
- 6: Website
- 61, 62, 63: Information

## Claims

1. A method for presenting information (61, 62, 63) to a user accessing a computer-based server (1) with a user computer (3) through a network (4), comprising the step of:
- providing a portal to the user, wherein the portal is a search tool on the server (1) containing an at least partially user-defined set of information requests used to gather the information (61, 62, 63) presented to the user,
wherein
- a user preference list (21) is loaded from an external computer-based storage device (2) to the portal server (1), and
- the set of information requests is defined according to the user preference list (21).

2. The method of claim 1, further comprising the step of
- requesting a user authentication by the portal server (1) prior to loading the user preference list (21).

3. The method of any of claims 1 or 2, further comprising the step of
- requesting the address of the external storage device (2) by the portal server (1) prior to loading the user preference list (21).

4. The method of any of claims 1 to 3, further comprising the step of
- providing the user with an interface on the user computer (3) for editing the user preference list (21), and
- storing the edited user preference list (21) on the external storage device (2).

5. A computer-based server (1) configured to provide access to a user via a portal through which information (61, 62, 63) is presented to the user in composite format (6), said server (1) being configured to carry out a method as claimed in any of the preceding claims.

6. A computer-based storage device (2) configured to store user preference lists (21) to be used in a method as claimed in any of claims 1 to 4, said storage device being network-connected to at least one server (1) as claimed in claim 5 and to at least one user computer (3).

7. A computer program product directly loadable into the internal memory of a digital computer comprising code for performing a method as claimed in any of claims 1 to 4.

8. A computer program product stored on a computer usable medium comprising computer readable program means for causing a computer to perform a method as claimed in any of claims 1 to 4.
